# FASCICULE DE BREVET EUROPEEN

(11) **EP 2 545 819 B1**
(45) Date de publication et mention de la délivrance du brevet: **13.09.2017**
(21) Numéro de dépôt: 12175174.7
(22) Date de dépôt: 05.07.2012
(51) Int. Cl.: A47J 19/04, A47J 43/07

(54) **Appareil électroménager de préparation culinaire comportant un dispositif presse-purée**
Elektrohaushaltsgerät zur Essenzubereitung, das mit einer Vorrichtung zum Püreepressen ausgestattet ist
Electric domestic appliance for food preparation comprising a potato-masher device

(30) Priorité: 13.07.2011 FR 1156400
(43) Date de publication de la demande: 16.01.2013
(73) Titulaire: SEB S.A., 69130 Ecully (FR)
(72) Inventeur: Hamelin, Franck, 50490 Saint-Sauveur-Lendelin (FR)
(74) Mandataire: Bourrières, Patrice

(56) Documents cités:
- EP-A2- 1 127 526
- DE-B- 1 107 907
- US-A- 4 759 507

## Description

La présente invention concerne le domaine technique général des appareils électroménagers de préparation culinaire comportant un boîtier moteur destiné à être tenu à la main et se rapporte plus particulièrement à un appareil électroménager comportant un dispositif presse-purée.

Il est connu, du brevet FR 1 437 573, un dispositif presse-purée pouvant être accouplé à un boîtier moteur destiné à être tenu à la main, le dispositif presse-purée comprenant une palette, entraînée en rotation par le boîtier moteur, qui vient à proximité immédiate d'une grille perforée afin de réaliser de la purée en forçant les aliments à passer au travers des trous de la grille.

Un tel dispositif presse-purée présente l'avantage de se présenter sous la forme d'un accessoire pouvant être accouplé à un boîtier moteur d'appareil de type mixeur plongeant, à la place du pied de mixage, afin d'offrir une fonction supplémentaire à l'appareil et permettre à l'utilisateur de réaliser des purées de légumes sans effort. En particulier, un tel accessoire presse-purée est particulièrement efficace pour réaliser des purées de pommes de terre, de type purée mousseline, très fines et sans morceaux.

Toutefois, un tel accessoire presse-purée présente l'inconvénient de ne pas être adapté pour permettre la réalisation d'une purée plus grossière, avec des morceaux. De plus, l'accessoire presse-purée selon ce document de l'art antérieur peut conduire à la réalisation d'une purée collante sous l'effet du cisaillement répété de la pomme de terre par la palette avant qu'elle ne pénètre dans un trou de la grille.

L'invention qui suit vise à pallier ces inconvénients en proposant un appareil électroménager de préparation culinaire comportant un boîtier moteur destiné à être tenu à la main et un outil presse-purée qui permet la réalisation de purées avec différents types de textures, tout en étant simple et économique à réaliser.

Le but de l'invention est atteint par un appareil électroménager de préparation culinaire comportant un dispositif presse-purée accouplé à un boîtier moteur destiné à être tenu à la main, le dispositif presse-purée comprenant une palette entraînée en rotation par le boîtier moteur et une grille comportant une zone de traitement munie de trous balayée par la palette, caractérisé en ce que l'appareil comprend au moins une première grille et une deuxième grille interchangeables se différenciant l'une de l'autre par la taille et/ou la forme des trous, les première grille et deuxième grille pouvant se monter l'une à la place de l'autre afin de permettre la préparation de purées avec des textures différentes.

Selon une autre caractéristique de l'invention, les trous de la première grille sont circulaires et les trous de la deuxième grille sont oblongs, les trous oblongs de la deuxième grille présentant une largeur supérieure au diamètre des trous circulaires de la première grille perforée.

Selon une autre caractéristique de l'invention, les trous circulaires de la première grille perforée présentent un diamètre inférieur à 3 mm et de préférence de l'ordre de 2,5 mm.

Selon une autre caractéristique de l'invention, les trous de la première grille sont répartis de telle sorte que chaque point de la palette passant sur la zone de traitement se trouve au moins une fois en regard d'un trou de la première grille lorsque la palette effectue un tour.

Selon une autre caractéristique de l'invention, la première grille présente une forme tronconique et les trous de la première grille sont répartis en spirale hélicoïdale par rapport au centre de la première grille.

Selon encore une autre caractéristique de l'invention, les trous oblongs de la deuxième grille présentent une largeur supérieure à 2 mm et une longueur supérieure à 6 mm.

Selon encore une autre caractéristique de l'invention, la palette repose sur une pièce entretoise disposée entre la grille et la palette.

Selon encore une autre caractéristique de l'invention, le dispositif presse-purée comprend un fût comportant une extrémité supérieure comprenant une pièce d'accouplement assurant le montage amovible du dispositif presse-purée sur le boîtier moteur, le fût renfermant un arbre entraîné en rotation par le boîtier moteur et comprenant une extrémité inférieure supportant la grille, l'arbre comportant une extrémité débouchant au centre de la grille sur laquelle la palette est fixée.

Selon encore une autre caractéristique de l'invention, l'appareil comporte un pied de mixage pouvant être accouplé au boîtier moteur. Un tel pied de mixage est par exemple décrit dans la demande de brevet FR 2 861 568 déposée par la demanderesse.

On comprendra mieux les buts, aspects et avantages de la présente invention, d'après la description donnée ci-après d'un mode particulier de réalisation de l'invention, présenté à titre d'exemple non limitatif, en se référant aux dessins annexés dans lesquels :
- la figure 1 est une vue en perspective éclatée d'un appareil électroménager muni d'un dispositif presse-purée selon un mode particulier de réalisation de l'invention ;
- la figure 2 est une vue en coupe longitudinale du dispositif presse-purée de la figure 1 ;
- la figure 3 est une vue éclatée, de côté, du système de fixation de la palette et de la grille ;
- les figures 4 et 5 sont respectivement des vues de dessus d'une première grille perforée et d'une deuxième grille perforée destinées à équiper le dispositif presse-purée de la figure 1 ;
- les figures 6 et 7 sont respectivement des vues en perspective de l'appareil électroménager de la figure 1 équipé de la première et de la deuxième grille perforée.

Seuls les éléments nécessaires à la compréhension de l'invention ont été représentés. Pour faciliter la lecture des dessins, les mêmes éléments portent les mêmes références d'une figure à l'autre.

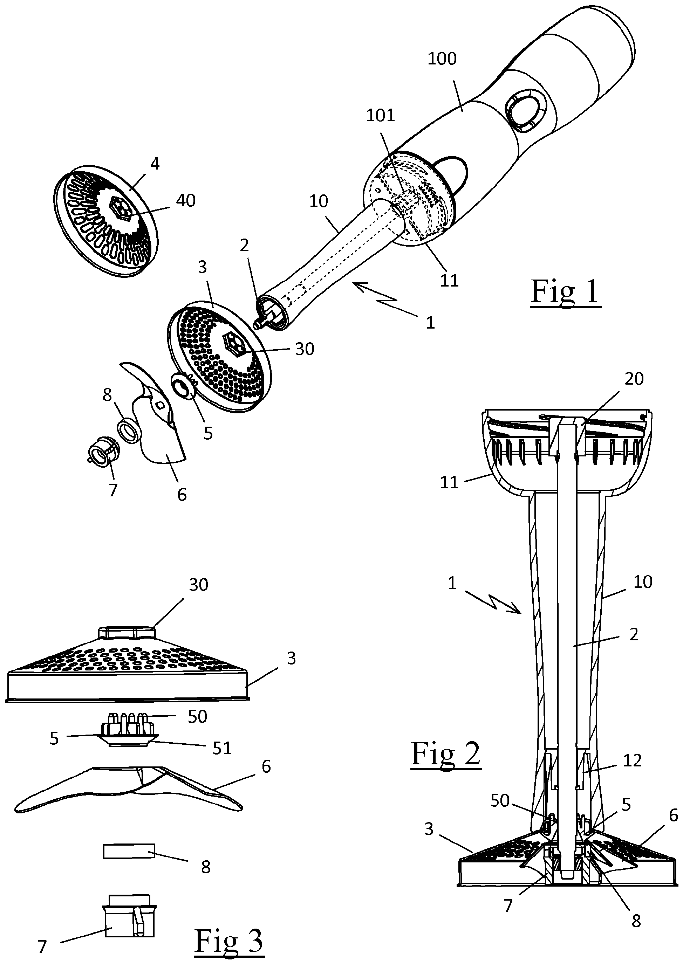

La figure 1 représente un dispositif presse-purée 1 accouplé à un boîtier moteur 100 de mixeur ménager refermant, de manière connue en soi, un moteur possédant un arbre de sortie muni d'un entraîneur rotatif 101, représenté en pointillé sur cette figure, traversant une ouverture pratiquée dans la partie inférieure du boîtier moteur 100. Un tel boîtier moteur 100 est bien connu de l'art antérieur et est décrit plus en détails dans la demande de brevet FR 2 861 568 déposée par la demanderesse.

Dans l'exemple de réalisation illustré, le dispositif presse-purée est constitué par un accessoire 1 monté de manière amovible sur le boîtier moteur 100, cet accessoire 1 comportant un fût 10 tubulaire comprenant une partie supérieure comportant une pièce d'accouplement 11 assurant son montage sur le boîtier moteur 100.

Le fût 10 tubulaire est avantageusement réalisé en acier inox ou en matière plastique et renferme un arbre d'entraînement 2 guidé par un palier 12 (visible sur la figure 2) disposé à proximité de l'extrémité inférieure de l'arbre d'entraînement 2, l'extrémité supérieure de l'arbre d'entraînement 2 étant munie d'un embout 20 venant s'accoupler avec l'entraîneur rotatif 101 du boîtier moteur 100 lorsque l'accessoire 1 presse-purée est accouplé au boîtier moteur 100.

Plus particulièrement selon l'invention, l'extrémité inférieure de l'accessoire presse-purée 1 reçoit un outil presse-purée comportant un jeu de grilles 3, 4 interchangeables présentant des perforations différentes, chaque grille 3, 4 pouvant se monter à l'extrémité inférieure du fût 10 tubulaire de manière à coopérer avec une palette 6, entraînée en rotation par le boîtier moteur 100, passant sur la grille 3, 4.

Dans l'exemple illustré, le jeu de grilles comporte une première grille 3 perforée permettant la réalisation de purée mousseline et une deuxième grille 4 perforée permettant la réalisation de purée avec une texture plus grossière.

Chaque grille 3, 4 est avantageusement tronconique et comporte une partie hexagonale 30, 40 faisant saillie en son sommet, la partie hexagonale 30, 40 venant s'insérer dans une forme hexagonale complémentaire de l'extrémité inférieure du fût 10 afin de brider la grille 3, 4 en rotation sur le fût 10.

De manière préférentielle, chaque grille 3, 4 est obtenue par emboutissage d'une tôle d'inox d'une épaisseur de l'ordre de 0,7 mm et la partie hexagonale 30, 40 est obtenue directement lors de l'emboutissage de la grille 3, 4.

Conformément à la figure 3, qui illustre isolément l'outil presse-purée équipé de la première grille 3, la première grille 3 est fixée axialement à l'extrémité du fût 10 en étant prise en sandwich entre le fût 10 et une pièce entretoise 5 venant se placer sous la première grille 3, la palette 6 étant maintenue en appui contre la pièce entretoise 5 au moyen d'un écrou de serrage 7 venant se visser sur l'extrémité inférieure filetée de l'arbre d'entraînement 2 et un joint 8 en matériau souple, de type caoutchouc nitrile (NBR), étant interposé entre la palette 6 et l'écrou de serrage 7 afin d'autoriser un léger déplacement axial de la palette 6 en direction de l'écrou de serrage 7 lorsque la palette rencontre des aliments durs.

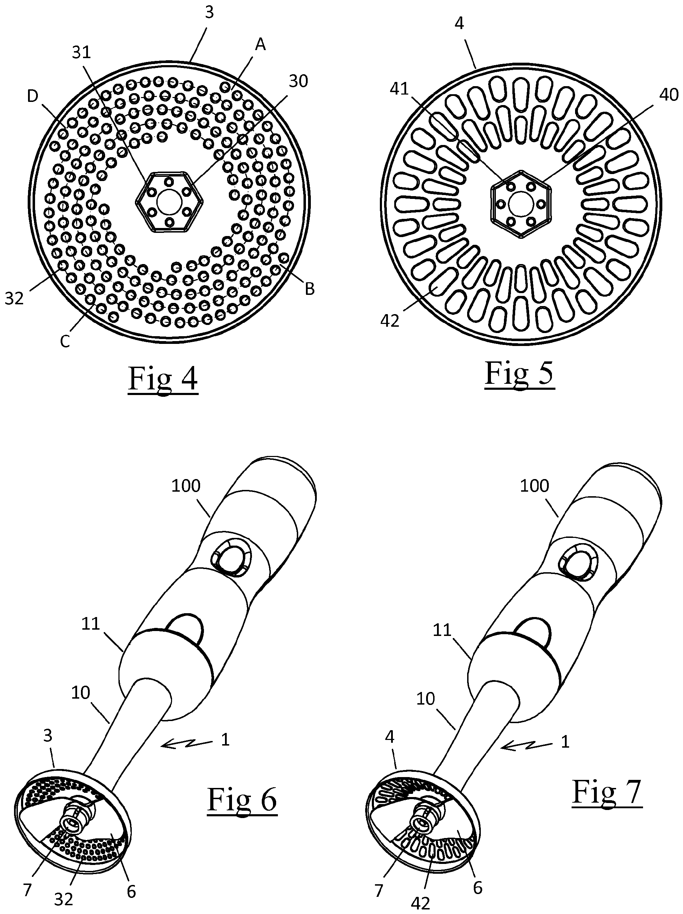

La pièce entretoise 5 comporte des doigts 50 venant s'insérer dans des orifices 31, 41 correspondants (visibles sur les figures 4 et 5) ménagés dans la partie hexagonale 30, 40 des première et deuxième grilles pour bloquer la pièce entretoise 5 en rotation sur la grille, les doigts 50 comportant avantageusement une extrémité évasée de sorte que la pièce entretoise 5 est immobilisée sur la grille 3, 4 lorsque les doigts 50 sont introduits dans les orifices 31,41.

La pièce entretoise 5 présente avantageusement une partie tronconique 51 munie d'une extrémité annulaire sur laquelle la palette 6 vient reposer, la pièce entretoise 5 étant dimensionnée de telle sorte qu'il résulte un léger jeu, de l'ordre de 1 mm entre la palette 6 et la grille 3, 4, et étant préférentiellement moulée dans un matériau thermoplastique de type polyacétal (POM) présentant l'avantage de posséder de bonnes propriétés de glissement et une bonne résistance à l'usure.

Conformément à la figure 4, la première grille 3 destinée à la réalisation de purée mousseline comporte préférentiellement une série de trous 32 circulaires, de petite taille, répartis sur une zone de traitement de la première grille 3 balayée par la palette 6 lors de son entraînement en rotation par le boîtier moteur 100, cette zone de traitement correspondant sensiblement à une bande s'étendant radialement sur les deux tiers du rayon de la première grille à partir de la périphérie de cette dernière.

Ces trous 32 circulaires présentent avantageusement un diamètre inférieur à 3 mm, et de préférence de l'ordre de 2,5 mm, et sont répartis selon quatre spirales hélicoïdales A, B, C, D décalées angulairement de 90° les unes des autres, représentées en traits mixtes sur la figure 4. Une telle répartition des trous 32 circulaires présente l'avantage de créer un décalage radial entre les trous 32 successivement balayés par la palette 6 lors de sa rotation de sorte que chaque point de la palette 6, passant sur la zone de traitement, se trouve plusieurs fois en regard d'un trou 32 de la grille lorsque la palette effectue un tour.

Une telle première grille 3 perforée, lorsqu'elle est assemblée à l'accessoire presse-purée 1 et au boîtier moteur 100, ainsi que cela est illustré sur la figure 6, permet la réalisation de purée mousseline avec une grande facilité, l'utilisateur n'ayant qu'à amener la palette 6 entraînée en rotation par le boîtier moteur 100 au contact des aliments cuits, tels que des pommes de terre, pour que la palette 6 attrape ces aliments et force leur passage au travers des trous 32 de la grille 3. De plus, l'usage d'une telle première grille 3 avec des trous 32 répartis en spirales hélicoïdales permet d'éviter que des morceaux de pommes de terre se trouvent entraînés en rotation dans une zone de la grille démunie de trous et se trouvent alors cisaillés et échauffés de manière excessive. Une telle première grille 3 présente donc l'avantage de permettre la réalisation de purée mousseline peu collante en limitant le temps de passage de la pomme de terre entre la grille 3 perforée et la palette 6.

Conformément à la figure 5, la deuxième grille 4, destinée à la réalisation d'une purée plus grossière, comporte des trous 42 oblongs de différentes tailles répartis sur la zone de traitement de la grille balayée par la palette 6 lors de son entraînement en rotation par le boîtier moteur 100.

Ces trous oblongs 42 sont répartis sur la deuxième grille 4 par rangée de deux trous 42 alignés radialement l'un derrière l'autre, chaque trou 42 oblong présentant avantageusement une longueur supérieure à 6 mm et une largeur supérieure à 2 mm, les trous 42 disposés près de la périphérie de la deuxième grille présentant une largeur plus importante que les trous 42 disposés du côté du centre de la grille.

De manière préférentielle, les trous 42 de deux rangées adjacentes sont décalés radialement de manière à ce que chaque point de la palette 6 passant sur la deuxième grille 4 se trouve au moins une fois en regard d'un trou 42 de la grille lorsque la palette 6 balaye deux rangées de trous 42 successives.

Une telle deuxième grille 4 peut être disposée à la place de la première grille 3 pour former un accessoire presse-purée 1 accouplé au boîtier moteur 100, ainsi que cela est illustré sur la figure 7, présentant l'avantage de permettre facilement la réalisation de purées plus grossières, contenant des petits morceaux.

Bien entendu, l'invention n'est nullement limitée au mode de réalisation décrit et illustré qui n'a été donné qu'à titre d'exemple. Des modifications restent possibles, notamment du point de vue de la constitution des divers éléments ou par substitution d'équivalents techniques, sans sortir pour autant du domaine de protection de l'invention défini par les revendications. Ainsi, dans une variante de réalisation de l'invention non représentée, l'accessoire presse-purée pourra être solidaire du boîtier moteur de manière non démontable.

## Revendications

1. Appareil électroménager de préparation culinaire comportant un dispositif presse-purée (1) accouplé à un boîtier moteur (100) destiné à être tenu à la main, ledit dispositif presse-purée (1) comprenant une palette (6) entraînée en rotation par ledit boîtier moteur (100) et une grille (3, 4) comportant une zone de traitement munie de trous (32, 42) balayée par la palette (6), **caractérisé en ce que** ledit appareil comprend au moins une première grille (3) et une deuxième grille (4) interchangeables se différenciant l'une de l'autre par la taille et/ou la forme desdits trous (32, 42), les première grille (3) et deuxième grille (4) pouvant se monter l'une à la place de l'autre afin de permettre la préparation de purées avec des textures différentes.

2. Appareil électroménager selon la revendication 1, **caractérisé en ce que** les trous (32) de la première grille (3) sont circulaires et les trous (42) de la deuxième grille (4) sont oblongs, lesdits trous (42) oblongs de la deuxième grille (4) présentant une largeur supérieure au diamètre des trous (32) circulaires de la première grille (3) perforée.

3. Appareil électroménager selon la revendication 2, **caractérisé en ce que** les trous (32) circulaires de la première grille (3) perforée présentent un diamètre inférieur à 3 mm et de préférence de l'ordre de 2,5 mm.

4. Appareil électroménager selon l'une quelconque des revendications 1 à 3, **caractérisé en ce que** les trous (32) de la première grille (3) sont répartis de telle sorte que chaque point de la palette (6) passant sur la zone de traitement se trouve au moins une fois en regard d'un trou (32) lorsque la palette (6) effectue un tour.

5. Appareil électroménager selon la revendication 4, **caractérisé en ce que** la première grille (3) présente une forme tronconique et **en ce que** les trous (32) de la première grille (3) sont répartis en spirale hélicoïdale par rapport au centre de la première grille (3).

6. Appareil électroménager selon l'une quelconque des revendications 2 à 5, **caractérisé en ce que** les trous (42) oblongs de la deuxième grille (4) présentent une largeur supérieure à 2 mm et une longueur supérieure à 6 mm.

7. Appareil électroménager selon l'une quelconque des revendications 1 à 6, **caractérisé en ce que** la palette (6) repose sur une pièce entretoise (5) disposée entre la grille (3, 4) et la palette (6).

8. Appareil électroménager selon l'une quelconque des revendications 1 à 7, **caractérisé en ce que** le dispositif presse-purée (1) comprend un fût (10) comportant une extrémité supérieure comprenant une pièce d'accouplement (11) assurant le montage amovible du dispositif presse-purée (1) sur le boîtier moteur (100), ledit fût (10) renfermant un arbre (2) entraîné en rotation par le boîtier moteur (100) et comprenant une extrémité inférieure supportant la grille (3, 4), ledit arbre (2) comportant une extrémité débouchant au centre de la grille (3, 4) sur laquelle la palette (6) est fixée.

9. Appareil électroménager selon la revendication 8, **caractérisé en ce que** ledit appareil comporte un pied de mixage pouvant être accouplé au boîtier moteur (100).

## Patentansprüche

1. Elektrisches Haushaltsgerät zur kulinarischen Zubereitung, das eine Püreepressevorrichtung (1) aufweist, die mit einem Motorgehäuse (100) gekoppelt ist, das dazu bestimmt ist, in der Hand gehalten zu werden, wobei die Püreepressevorrichtung (1) ein Flügelrad (6), das durch das Motorgehäuse (100) in Rotation angetrieben wird, und ein Gitter (3, 4) umfasst, das einen Verarbeitungsbereich aufweist, der mit Löchern (32, 42) versehen ist, die von dem Flügelrad (6) überstrichen werden, **dadurch gekennzeichnet, dass** das Gerät mindestens ein erstes Gitter (3) und ein zweites Gitter (4) umfasst, die austauschbar sind und sich voneinander durch die Größe und / oder die Form von Löchern (32, 42) unterscheiden, wobei das erste Gitter (3) und das zweite Gitter (4) jeweils anstelle des anderen angebracht werden können, um die Zubereitung von Pürees mit unterschiedlichen Texturen zu ermöglichen.

2. Haushaltsgerät nach Anspruch 1, **dadurch gekennzeichnet, dass** die Löcher (32) von dem ersten Gitter (3) kreisförmig sind, und dass die Löcher (42) von dem zweiten Gitter (4) länglich sind, wobei die länglichen Löcher (42) von den zweiten Gitter (4) eine Breite aufweisen, die größer als der Durchmesser der kreisförmigen Löcher (32) von dem ersten perforierten Gitter (3) ist.

3. Haushaltsgerät nach Anspruch 2, **dadurch gekennzeichnet, dass** die kreisförmigen Löcher (32) von dem ersten perforierten Gitter (3) einen Durchmesser von weniger als 3 mm und vorzugsweise in der Größenordnung von 2,5 mm aufweisen.

4. Haushaltsgerät nach einem der Ansprüche 1 bis 3, **dadurch gekennzeichnet, dass** die Löcher (32) von dem ersten Gitter (3) so verteilt sind, dass jeder Punkt des Flügelrads (6), der über den Verarbeitungsbereich läuft, sich zumindest einmal gegenüber einem Loch (32) befindet, wenn das Flügelrad (6) eine Umdrehung macht.

5. Haushaltsgerät nach Anspruch 4, **dadurch gekennzeichnet, dass** das erste Gitter (3) eine kegelstumpfförmige Form aufweist, und dass die Löcher (32) von dem ersten Gitter (3) in einer schraubenförmigen Spirale mit Bezug auf die Mitte von dem ersten Gitter (3) verteilt sind.

6. Haushaltsgerät nach einem der Ansprüche 2 bis 5, **dadurch gekennzeichnet, dass** die länglichen Löcher (42) von dem zweiten Gitter (4) eine Breite von mehr als 2 mm und eine Länge von mehr als 6 mm aufweisen.

7. Haushaltsgerät nach einem der Ansprüche 1 bis 6, **dadurch gekennzeichnet, dass** das Flügelrad (6) auf einem Distanzstück (5) ruht, das zwischen dem Gitter (3, 4) und dem Flügelrad (6) angeordnet ist.

8. Haushaltsgerät nach einem der Ansprüche 1 bis 7, **dadurch gekennzeichnet, dass** die Püreepressevorrichtung (1) einen Schaft (10) umfasst, der ein oberes Ende umfasst, das ein Kupplungsteil (11) umfasst, dass die abnehmbare Montage der Püreepressevorrichtung (1) auf dem Motorgehäuse (100) gewährleistet, wobei der Schaft (10) eine Welle (2) umschließt, die durch das Motorgehäuse (100) in Drehung angetrieben wird und ein unteres Ende aufweist, das das Gitter (3, 4) trägt, wobei die Welle (2) ein Ende aufweist, das in der Mitte des Gitters (3, 4) mündet und auf dem das Flügelrad (6) befestigt ist.

9. Haushaltsgerät nach Anspruch 8, **dadurch gekennzeichnet, dass** das Gerät einen Mischfuß umfasst, der an dem Motorgehäuse (100) angekoppelt werden kann.

## Claims

1. Electric domestic appliance for food preparation comprising a potato-masher device (1) coupled with motor housing (100) intended to be handheld, said potato-masher device (1) comprising a blade (6) rotating by said motor housing (100) and a grate (3, 4) comprising a processing area equipped with holes (32, 42) swept past by the blade (6), **characterised in that** said appliance comprises at least one first grate (3) and one second grate (4) that are interchangeable, being distinguished from each other by the size and/or shape of said holes (32, 42), the first grate (3) and second grate (4) being able to be assembled in each other's spaces, in order to enable the preparation of mashed potato with different textures.

2. Electric domestic appliance according to claim 1, **characterised in that** the holes (32) of the first grate (3) are circular and the holes (42) of the second grate (4) are oblong, said oblong holes (42) of the second grate (4) presenting a width wider than the diameter of the circular holes (32) of the first perforated grate (3).

3. Electric domestic appliance according to claim 2, **characterised in that** the circular holes (32) of the first perforated grate (3) present a diameter smaller than 3mm and preferably 2.5mm.

4. Electric domestic appliance according to any one of the claims 1 to 3, **characterised in that** the holes (32) of the first grate (3) are spread out so that each blade (6) tip passing over the processing area is located at least once opposite a hole (32) when the blade (6) rotates.

5. Electric domestic appliance according to claim 4, **characterised in that** the first grate (3) presents a truncated shape and **in that** the holes (32) of the first grate (3) are spread out in a helicoidal spiral in relation to the centre of the first grate (3).

6. Electric domestic appliance according to any one of the claims 2 to 5, **characterised in that** the oblong holes (42) of the second grate (4) present a width wider than 2mm and a length longer than 6mm.

7. Electric domestic appliance according to any one of the claims 1 to 6, **characterised in that** the blade (6) rests on a spacer (5) positioned between the grate (3, 4) and the blade (6).

8. Electric domestic appliance according to any one of the claims 1 to 7, **characterised in that** the potato-masher device (1) comprises a drum (10) comprising an upper end comprising a coupling component (11) ensuring the detachable assembly of the potato-masher device (1) on the motor housing (100), said drum (10) containing a shaft (2) rotating by the motor housing (100) and comprising a lower end supporting the grate (3, 4), said shaft (2) comprising an end leading to the centre of the grate (3, 4) whereon the blade (6) is fixed.

9. Electric domestic appliance according to claim 8, **characterised in that** said appliance comprises a blender attachment which could be coupled with the motor housing (100).
